## Europäisches Patentamt

## European Patent Office

## Office européen des brevets

(19)

(11) Veröffentlichungsnummer: **0 284 838**
**B1**

(12)

# EUROPÄISCHE PATENTSCHRIFT

(45) Veröffentlichungstag der Patentschrift:
28.11.90

(51) Int. Cl.⁵: **B65G 69/28**

(21) Anmeldenummer: **88103601.6**

(22) Anmeldetag: **08.03.88**

(54) **Überladebrücke für Rampen.**

(30) Priorität: **31.03.87 DE 3710773**

(43) Veröffentlichungstag der Anmeldung:
**05.10.88 Patentblatt 88/40**

(45) Bekanntmachung des Hinweises auf die Patenterteilung:
**28.11.90 Patentblatt 90/48**

(84) Benannte Vertragsstaaten:
**AT BE CH DE ES FR GB GR IT LI LU NL SE**

(56) Entgegenhaltungen:
**DE-A- 3 443 127**

(73) Patentinhaber: **Alten, Kurt, Ringstrasse 14,
D-3015 Wennigsen(DE)**

(72) Erfinder: **Alten, Kurt, Ringstrasse 14,
D-3015 Wennigsen(DE)**

(74) Vertreter: **Depmeyer, Lothar, Auf der Höchte 30,
D-3008 Garbsen 1(DE)**

## Beschreibung

Die Erfindung betrifft eine Überladebrücke für Rampen nach dem Gattungsbegriff des 1. Patentanspruchs.

Bei Überladebrücken dieser Ausbildung ( DE-OS 34 43 127 ) ist die Brückenplatte in von ihrer Betriebsstellung abweichenden Schwenkstellungen frei abhebbar bzw. montierbar. In den Betriebsstellungen wird ein ungewolltes Abheben oder Lösen der Brückenplatte von der Lagerstelle durch einen mit der Brückenplatte verbundenen Sperriegel unterbunden, der in diesen Stellungen ein festes Widerlager hinterfasst. Demgemäss ist die Montierbarkeit abhängig von der Schwenkstellung der Brückenplatte.

Der Erfindung liegt im wesentlichen die Aufgabe zugrunde, die eingangs erwähnten Überladebrücken so zu verbessern, dass eine Montage und Demontage der Brückenplatte auch in waagerechter Stellung der Brückenplatte möglich ist, dennoch aber eine betriebssichere Halterung der Brückenplatte gewährleistet wird.

Zur Lösung dieser Aufgabe ist erfindungsgemäss das Sicherungselement so ausgeführt, dass es an seinem oberen Ende die Achse übergreift und an seinem unteren Ende unterhalb der Achse lösbar an der Rampe befestigt ist. Zweckmässigerweise wird dabei das Sicherungselement mit einer zur Aufnahme der Achse dienenden Ausnehmung versehen, die auch als Langloch derart ausgebildet sein kann, dass es oben zur Aufnahme der Achse und unten zur Aufnahme eines lösbaren Sperrbolzens dienen kann.

Dieses Sicherungselement wird vor der Brückenmontage auf die Achse aufgeschoben bzw. mit dieser verbunden. Nachdem die Achse in den schalenförmigen Lagern angeordnet ist, werden die Sicherungselemente unterhalb der Brückenplatte lösbar mit der Rampe z.B. durch den erwähnten Sperrbolzen verbunden.

Besonders einfach ist diese Absicherung der Brückenplatte, wenn das Sicherungselement nach Art eines Kettengliedes, insb. nach Art eines Gliedes für eine Rundstahlkette ausgeführt ist. Zudem ist es auch sehr vorteilhaft, wenn die Sicherungselemente die Achsen zu beiden Seiten der Brückenplatte übergreifen, wo sie die seitlichen Ränder der Brückenplatte stummelartig überragen. Dort können die Sicherungselemente ohne Behinderung auf die Achse aufgeschoben werden.

Weitere Einzelheiten der in den Ansprüchen definierten Erfindung werden anhand der Zeichnung erläutert, in der ein Ausführungsbeispiel der Erfindung dargestellt ist. Es zeigen :

Fig. 1 eine Teildraufsicht auf das rampenseitige Ende einer Überladebrücke,
Fig. 2 einen Schnitt nach der Linie II - II von Fig. 1 und
Fig. 3 einen Schnitt nach der Linie III - III von Fig. 1.

Die Brückenplatte 1, die an ihrem freien, vorderen Ende eine Verlängerung 2 zur Auflage auf der zu be- bzw. entladenden Plattform aufweist, hat an ihrem rampenseitigen Ende unterhalb des Deckbleches 3 der Brückenplatte 1 eine quer verlaufende Achse 4 in Form eines Rundstahles.

Die Brückenplatte 1 befindet sich mit geringem Spiel in einer Aussparung 5 der Rampe 6, in die sie eintauchen kann. Diese Aussparung 5 wird oben durch Winkeleisen 7 begrenzt, deren senkrechter Schenkel 8 die Aussparung 5 oben begrenzt und deren waagerechter Schenkel 9 eingelassen ist. Die Länge der Achse 4 ist geringfügig grösser als die Breite der Brückenplatte 1; die Achse 4 liegt dabei mit ihren Stirnflächen praktisch an den benachbarten senkrechten Flächen der Aussparung 5 an.

Zur schwenkbaren Lagerung der Brückenplatte 1 dienen mehrere über die Brückenbreite verteilt angeordnete, am Schenkel 8 angeschweisste, senkrechte Lagerbleche 10, die oben eine halbkreisförmige Ausnehmung 11 zum Einlegen der Achse 4 und senkrecht darunter eine Bohrung 12 haben, deren Durchmesser praktisch der Achse 4 bzw. dem die Ausnehmung 11 bestimmenden Durchmesser entspricht.

Um ein ungewolltes Abheben der Brückenplatte 1, also ein Herausheben der Achse 4 aus ihren Lagerstellen bzw. den Ausnehmungen 11 zu verhindern, sind zwei Sicherungselemente, und zwar ein Sicherungselement an jeder Brückenseite vorgesehen in Form von Gliedern 13 einer Rundstahlkette, deren lichte Innenweite dem Durch messer der Achse 4 entspricht und deren Rundstahldurchmesser nicht grösser ist als die Wandstärke des Deckbleches 3. Diese Glieder 13 übergreifen die seitlich überstehenden Stummel 14 der Achse und umschliessen ferner einen parallel zur Achse 4 verlaufenden, senkrecht darunter befindlichen Sperrbolzen 15, der in zwei benachbarten Lagerblechen 10 durch Einstecken in die Bohrung 12 gelagert und durch einen Spannstift gegen Verschieben gesichert ist, der mit 16 bezeichnet ist. Das somit gegen Abziehen nach oben abgesicherte Glied 13 verhindert seinerseits ein ungewolltes Anheben der Brückenplatte 1 durch Herausheben aus den schalenförmigen Lagerstellen.

Zur Montage oder Demontage der Brückenplatte 1 wird der Sperrbolzen 15 entfernt. Die Brückenplatte 1 kann dann frei - zusammen mit den beidseitig angeordneten Gliedern 13 - abgehoben und wieder eingesetzt werden.

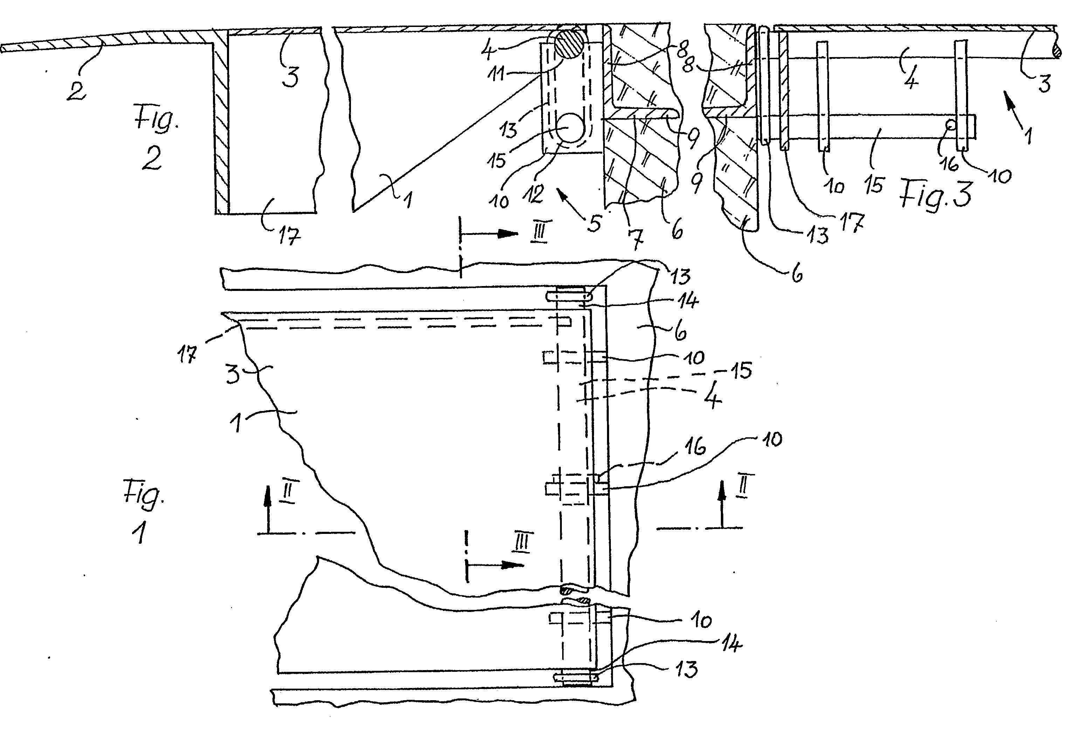

Ungewollte Verlagerung der beiden Glieder 13 können nicht eintreten, da sie infolge des geringen Spiels der Brückenplatte 1 gegenüber der Rampe 6 nicht verkanten können. Dazu trägt auch das die Brückenplatte 1 seitlich abschliessende Seitenblech 17 bei, vgl. dazu auch Fig. 3.

## Patentansprüche

1. Überladebrücke für Rampen mit einer an ihrem rampenseitigen Ende um eine waagerechte Achse (4) an der Rampe (6) verschwenkbar gelagerten Brückenplatte (1) zur Auflage auf der zu be- bzw. entladenden Plattform mit ihrem freien Ende, wobei die Brückenplatte (1) mit ihrer Achse (4) auf einem oder mehreren an der Rampe fest angeordneten, oben offenen, schalenförmigen Lagern (10) aufliegt und in der Betriebsstellung durch ein Sicherungselement (13) gegen Abheben der Achse (4) von den Lagern (10) gesichert ist, dadurch gekennzeichnet, dass das Sicherungselement (13) oben die Achse (4) die übergreift und unten unterhalb der Achse lösbar mit der Rampe (10,6) verbunden ist.

2. Überladebrücke nach Anspruch 1, dadurch gekennzeichnet, dass das Sicherungselement (13) mit einer zur Aufnahme der Achse (4) dienenden Ausnehmung versehen ist.

3. Überladebrücke nach Anspruch 1, dadurch gekennzeichnet, dass das Sicherungselement (13) unten mit einer Ausnehmung zur Aufnahme eines Sperrbolzens (15) versehen ist.

4. Überladebrücke nach Anspruch 1 bis 3, dadurch gekennzeichnet, dass das Sicherungselement (13) mit einem Langloch zur Aufnahme der Achse (4) und des Sperrbolzens (15) ausgestattet ist.

5. Überladebrücke nach Anspruch 1 - 4, dadurch gekenn zeichnet, dass das Sicherungselement (13) nach Art eines Kettengliedes, insb. einer Rundstahlkette ausgebildet ist.

6. Überladebrücke nach Anspruch 1 und 3, dadurch gekennzeichnet, dass der Sperrbolzen (15) in den zur Halterung der Achse dienenden Elementen (10) längsverschiebar, jedoch arretierbar parallel zur Achse gehalten ist.

7. Überladebrücke nach Anspruch 1, dadurch gekennzeichnet, dass das Sicherungselement (13) die Achse (4) in einem die Brückenplatte (1) seitlich überragenden Bereich zwischen der Rampe (6) und der Brückenplatte (1) übergreift.

8. Überladebrücke nach Anspruch 7, dadurch gekennzeichnet, dass das die Brückenplatte (1) seitlich abschliessende Seitenblech (17) dem Sicherungselement unmittelbar benachbart liegt.

9. Überladebrücke nach Anspruch 7, dadurch gekennzeichnet, dass das Sicherungselement (13) den seitlich abstehenden Stummel (14) der Achse umschliesst bzw. übergreift, dessen Stirnfläche der benachbarten Wandung der Rampe (6) ohne wesentliches Spiel benachbart liegt.

10. Überladebrücke nach Anspruch 6, dadurch gekennzeichnet, dass der Sperrbolzen (15) mit einer Stirnfläche einer benachbarten Wandung der Rampe (6) mit geringem Spiel benachbart liegt und gegen Verschieben in Richtung auf die Brückenplatte durch einen Stift (16) gesichert ist.

## Claims

1. Ramp bridging device, comprising a bridge plate (1), which is mounted at its ramp end so as to be pivotable about a horizontal axle (4) on the ramp (6), for supporting purposes on the platform to be loaded or unloaded with its free end, the bridge plate (1) lying with its axle (4) on one or a plurality of upwardly open, dish-shaped bearings (10), which are fixedly disposed on the ramp, and being secured in the operational position by means of a securing element (13) to prevent the axle (4) being raised from the bearings (10), characterised in that, at its upper end, the securing element (13) engages over the axle (4) and, at its lower end, it is detachably connected to the ramp (10, 6) beneath the axle.

2. Bridging device according to claim 1, characterised in that the securing element (15) is provided with a recess for receiving the axle (4).

3. Bridging device according to claim 1, characterised in that, at its lower end, the securing element (13) is provided with a recess for receiving a locking bolt (15).

4. Bridging device according to claims 1 to 3, characterized in that the securing element (13) is provided with an elongate slot for receiving the axle (4) and the locking bolt (15),

5. Bridging device according to claims 1 to 4, characterised in that the securing element (13) is in the form of a chain member, more especially of a round steel chain.

6. Bridging device according to claims 1 and 3, characterised in that the locking bolt (13) is retained in the elements (10), which serve to support the axle, so as to be longitudinally displaceable, but lockable parallel to the axle.

7. Bridging device according to claim 1, characterised in that the securing element (13) engages over the axle (4) in a region, which laterally protrudes beyond the bridge plate (1), between the ramp (6) and the bridge plate (1).

8. Bridging device according to claim 7, characterised in that the lateral plate (17), which terminates the bridge plate (1) laterally, lies directly adjacent the securing element.

9, Bridging device according to claim 7, characterised in that the securing element (13) surrounds or engages over the laterally protruding stump (14) of the axle, the end face of said stump lying adjacent the adjacent wall of the ramp (6) without substantial play.

10. Bridging device according to claim 6, characterised in that the locking bolt (15) lies with one end face adjacent an adjacent wall of the ramp (6) with little play and is prevented from becoming displaced in the direction of the bridge plate by a pin (16).

## Revendications

1. Passerelle de transbordement pour des quais, comprenant un tablier de passerelle (1) monté basculant sur le quai (6) autour d'un axe (4) horizontal, par son extrémité se trouvant du côté du quai, et destiné à s'appuyer, par son extrémité libre, sur la plate-forme à charger et à décharger, l'axe (4) du tablier de la passerelle (1) reposant sur un ou sur plusieurs paliers (10) en forme de coussinets, ouverts vers le haut et montés rigidement sur le quai, et étant empêché, en la position de fonctionnement, de se soulever des paliers (10) par un élément de sécurité (13), caractérisée en ce que l'élément de sécurité (13) recouvre en haut l'axe (4) et est relié en bas, en-dessous de l'axe, de manière amovible au quai (10, 6).

2. Passerelle de transbordement suivant la revendication 1, caractérisée en ce que l'élément de sécurité (13) est muni d'un évidemment servant à la réception de l'axe (4).

3. Passerelle de transbordement suivant la revendication 1, caractérisée en ce que l'élément de sécurité (13) est muni en bas d'un évidemment de réception d'un axe de blocage (15).

4. Passerelle de transbordement suivant l'une des revendications 1 à 3, caractérisée en ce que l'élément de sécurité (13) est muni d'un trou oblong de réception de l'axe (4) et de l'axe de blocage (15) .

5. Passerelle de transbordement suivant l'une des revendications 1 à 4, caractérisée en ce que l'élément de sécurité (13) est constitué à la manière d'un maillon de chaîne, notamment d'une chaîne en barres d'acier.

6. Passerelle de transbordement suivant la revendication 1 ou 3, caractérisée en ce que l'axe de blocage (15) est maintenu dans les éléments (10) servant au maintien de l'axe, de manière à pouvoir coulisser longitudinalement, mais à être bloqué parallèlement à l'axe.

7. Passerelle de transbordement suivant la revendication 1, caractérisée en ce que l'élément de sécurité (13) recouvre l'axe (4), entre le quai (6) et le tablier de la passerelle (1), dans une partie qui dépasse latéralement du tablier de la passerelle (1).

8. Passerelle de transbordement suivant la revendication 7, caractérisée en ce que la tôle latérale (17) bornant latéralement le tablier de la passerelle (1), est immédiatement voisine de l'élément de sécurité.

9. Passerelle de transbordement suivant la revendication 7, caractérisé en ce que l'élément de sécurité (13) entoure ou recouvre le bout (14) en saillie latéralement de l'axe, la surface frontale de ce bout étant voisine, sensiblement sans jeu, de la paroi voisine du quai (6).

10. Passerelle de transbordement suivant la revendication 6, caractérisée en ce qu'une paroi frontale de l'axe de blocage (15) est voisine avec un faible jeu d'une paroi voisine du quai (6) et est empêchée de se déplacer en direction du tablier de la passerelle par une goupille (16).

Fig. 3

Fig. 2

Fig. 1